# EUROPÄISCHE PATENTANMELDUNG

(11) **EP 1 362 505 A1**
(43) Veröffentlichungstag der Anmeldung: **19.11.2003**
(21) Anmeldenummer: 03010577.9
(22) Anmeldetag: 12.05.2003
(51) Int. Cl.: A01D 78/10

(54) **Kreiselrechen für eine Heuwerbungsmaschine**

(30) Priorität: 14.05.2002 DE 20207643 U
(71) Anmelder: Maschinenfabrik Bernard Krone GmbH, 48480 Spelle (DE)
(72) Erfinder: Krone, Bernard, Dr.-Ing.E.h., 48480 Spelle (DE); Horstmann, Josef, Dr.-Ing., 49479 Ibbenbüren (DE); Afting, Andreas, 48488 Emsbüren (DE)

(57) **Zusammenfassung**

Kreiselrechen für eine Heuwerbungsmaschine, insbesondere für einen Kreiselschwader, mit um eine etwa vertikal ausgerichtete Achse (3) umlaufenden, an ihren äußeren Enden mit Zinken (5) bestückten Zinkenarmen (4), welche drehbar oder starr an einem Kreiselgehäuse (6) gehaltert sind und wobei zumindest einer der Zinkenarme (4) durch eine Schwenkverbindung (9) in einen inneren Abschnitt und einen äußeren Abschnitt aufteilt ist und wobei der äußere Abschnitt gegenüber dem inneren Abschnitt aus einer Arbeitsstellung (Strecklage) in eine von einer gemeinsamen Achse abweichenden, abgeknickten Transport- und Parkstellung überführbar ist und in dieser abgeknickten Transport- und Parkstellung gehalten wird.

## Beschreibung

Die Erfindung bezieht sich auf einen Kreiselrechen für eine Heuwerbungsmaschine, insbesondere für einen Kreiselschwader nach dem Oberbegriff des Anspruches 1. Derartige Kreiselrechen sind aus der Praxis in vielfältigen Ausführungsformen bekannt.

Aus der DE 196 50 650 C2 ist ein Kreiselrechen für eine Heuwerbungsmaschine bekannt geworden, welcher aus einer Mehrzahl von mit Zinken bestückten Zinkenarmen besteht, die in einem Kreiselgehäuse des Kreiselrechens drehbar gelagert sind und während der Drehbewegung des Kreiselrechens um eine etwa vertikale Achse von einer Steuerkurve gesteuert werden. Die Zinkenarme sind dabei so ausgeführt, daß sie im Bereich zwischen der Lagerung im Kreiselgehäuse und der Befestigungsstelle der Zinken an den Zinkenarmen über eine als Schiebesitzverbindung ausgebildete Trennstelle verfügen. Durch die Trennung der Zinkenarme an dieser Trennstelle können die Außenabmessungen des Kreiselrechens für den Transport auf der Straße dadurch reduziert werden, daß beispielsweise bei einem Doppelschwader mit zwei seitlich von einem Tragrahmen angeordneten Kreiselrechen die weitesten vom Tragrahmen beabstandeten Zinken mit den jeweils äußeren Abschnitten der Zinkenarme vom Kreiselrechen getrennt werden und an speziell für den Transport vorgesehenen Halterungen am Tragrahmen des Doppelschwaders angebracht werden können. Bei der Überführung der Kreiselrechen aus der nahezu bodenparallelen Arbeits- und Betriebsstellung in eine zumindest etwa vertikale Transportstellung führt die vorstehend beschriebene Maßnahme zu einer erheblichen Reduzierung der Transporthöhe des Doppelschwaders. Gleiches läßt sich auch bei der maximalen Transportbreite eines nur mit einem Kreiselrechen bestückten Einkreiselschwaders erreichen, in dem man die die maximale Transportbreite markierenden Zinken mit den jeweiligen äußeren Abschnitten der Zinkenarme vom Kreiselrechen abnimmt und in für den Transport vorgesehenen Halterungen des Rahmens anbringt. Das Trennen der Schiebesitzverbindungen der Tragarme ist jedoch mit Mängeln behaftet, die insbesondere bei einem häufigen Umsetzen der Heuwerbungsmaschine von einer Feld- oder Wiesenfläche zur Nächsten nachteilig auffallen. Zum einen ist hier der körperliche Kraftaufwand zu erwähnen, der notwendig ist, um die Schiebesitzverbindung der Zinkenarme auseinander zu ziehen. Beispielsweise durch Schmutzablagerungen kann es vorkommen, daß diese Schiebesitzverbindung nur sehr schwergängig getrennt werden kann. Desweiteren ist es immer ein zusätzlicher Arbeitsgang, wenn man vor dem Antritt einer Fahrt auf öffentlichen Straßen meist mehrere der äußeren Abschnitte der Zinkenarmen aus dieser Schiebesitzverbindung herauszieht und die äußeren Abschnitte der Zinkenarme danach in den speziell am Rahmen der Heuwerbungsmaschine angebrachten und oft im hinteren Bereich der Heuwerbungsmaschine gelegenen Transporthalterungen anbringt. Vor dem Beginn des nächsten Arbeitseinsatzes müssen dann natürlich die gleichen Arbeitsgänge in umgekehrter Reihenfolge ausgeführt werden.

Der Erfindung liegt daher die Aufgabe zugrunde, einen Kreiselrechen für eine Heuwerbungsmaschine der vorstehend angegebenen Art zu schaffen, welcher sich dadurch auszeichnet, daß die für den Transport auf öffentlichen Straßen oder für ein Abstellen der Heuwerbungsmaschine in wetterschützenden Gebäuden maßgeblichen, die Transporthöhe und/oder Transportbreite bestimmenden Außenabmessungen des Kreiselrechen mit minimalem Arbeits- und Kraftaufwand durch einen Bediener veränderbar sind.

Zur Lösung dieser Aufgabe zeichnet sich der Kreiselrechen der vorstehenden Art durch die Merkmale des Anspruchs 1 aus. Hinsichtlich der weiteren Ausgestaltung der Erfindung wird auf die Ansprüche 2 bis 9 verwiesen.

Bei einem Kreiselrechen für eine Heuwerbungsmaschine, insbesondere für einen Kreiselschwader ist es gemäß der Erfindung vorgesehen, die um eine etwa vertikal ausgerichtete Achse umlaufenden, an ihren äußeren Enden mit Zinken bestückten Zinkenarme derart auszubilden, daß zumindest einer der Zinkenarme durch eine Schwenkverbindung in einen inneren und einen äußeren Abschnitt aufgeteilt ist und daß der äußere Abschnitt gegenüber dem inneren Abschnitt aus einer Arbeitsstellung in eine abgeknickte Transport- und Parkstellung überführbar ist und in dieser Transport- und Parkstellung gehalten wird. Das bedeutet, daß einer oder auch mehrere der Zinkenarme aus einer Arbeitsstellung, in der der innere und der äußere Abschnitt der Zinkenarme sich in einer Strecklage befinden und eine gemeinsame Achse (Symmetrieachse) aufweisen, in eine Stellung bringbar sind, in der die Ausrichtung der Achse (Symmetrieachse) des äußeren Abschnittes von der des inneren Abschnittes abweicht und somit die durch die Zinken bestimmten Außenabmessungen des erfindungsgemäßen Kreiselrechens verringert werden. Der äußere Abschnitt des oder der Zinkenarme kann also mit nur minimalem Kraft- und Arbeitsaufwand durch eine Schwenkbewegung um die Schwenkverbindung in eine Stellung verbracht werden, welche hier als Transport- und Parkstellung bezeichnet ist und in der der äußere Abschnitt solange gehalten wird, bis durch ein Einwirken des Benutzers der äußere Abschnitt vor einem bevorstehenden Arbeitseinsatz wieder in die Arbeitsstellung (Strecklage) zurück geschwenkt wird.

Nach der Erfindung kann die Schwenkverbindung zwischen dem inneren und dem äußeren Abschnitt des oder der Zinkenarme so gestaltet sein, daß bei einer in etwa vertikal ausgerichteten Schwenkachse eine Schwenkbewegung des äußeren Abschnittes des oder der Zinkenarme eines in einer Arbeits- und Betriebsstellung befindlichen Kreiselrechens in einer etwa horizontalen Ebene möglich ist. Eine weitere denkbare Ausführungsform stellt bei einer Ausrichtung der Schwenkachse in etwa horizontaler Richtung eine Schwenkbewegung des äußeren Abschnitts des oder der Zinkenarme in etwa vertikalen Ebene zur Verfügung. Die äußeren Abschnitte des oder der Zinkenarme können hierbei also oberhalb von den inneren Abschnitten des oder der Zinkenarme angeordnet sein. Weiterhin ist es natürlich auch vorstellbar, die Schwenkachse der Schwenkverbindung so anzuordnen, daß diese eine Zwischenlösung der beiden vorstehend beschriebenen Ausführungsformen darstellt.

Eine vorteilhafte, konstruktiv einfache Ausführungsform der Erfindung geht von einer Ausbildung der Schwenkverbindung als Gelenk aus, wobei das Gelenk an der in Bezug zur Drehrichtung des Kreiselrechens vorlaufenden Seite des oder der Zinkenarme eine Steckbolzenverbindung aufweist, während an der in Bezug zur Drehrichtung des Kreiselrechens nachlaufenden Seite ein um die vertikale Schwenkachse bewegbares Schwenklager angeordnet ist. Damit der äußere Abschnitt des oder der Zinkenarme nach der Überführung in die Transportund Parkstellung auch sicher dort verbleibt und in dieser Stellung gehalten wird, besteht das Schwenklager aus zwei Laschen und einer mit den Laschen zusammenwirkenden Lagerbuchse, wobei erst nach Überwindung einer vorgegebenen, zwischen den Laschen und einer Stirnseite der Lagerbuchse aufgebauten Reibkraft eine Verschwenkung des äußeren Abschnitts des oder der Zinkenarme aus der Transport- und Parkstellung in die Arbeitsstellung bewirkt werden kann. Die Größe der Reibkraft zwischen den Laschen und der Lagerbuchse kann dabei mittels einer aus einer Schraube mit einer selbstsichernden Mutter gebildeten Schraubverbindung vorgegeben werden.

Weitere denkbare Ausführungsformen können sowohl von einer Anbringung der Steckbolzenverbindung an der in Bezug zur Drehrichtung des Kreiselrechens nachlaufenden Seite des oder der Zinkenarme oder an deren unterer Seite ausgehen, wobei dann das Schwenklager an der in Bezug zur Drehrichtung des Kreiselrechens vorlaufenden Seite des oder der Zinkenarme oder an deren oberer Seite angebracht sein müßte. Insbesondere für Heuwerbungsmaschinen mit nur einem Kreiselrechen kann sich eine Anbringung der Steckbolzenverbindung an der unteren Seite des oder der Zinkenarme und eine Anordnung des Schwenklagers an der oberen Seite des oder der Zinkarme als vorteilhaft erweisen, da bei einer großen Anzahl von Zinkenarmen an einem Kreiselrechen durch die oberhalb von den inneren Abschnitten des oder der Zinkenarme abgelegten äußeren Abschnitte des oder der Zinkenarme eine größere Reduzierung der Außenabmessungen des Kreiselrechens ermöglicht wird.

Weitere Einzelheiten und Vorteile der Erfindung gehen aus der folgenden, detaillierten Beschreibung eines von zahlreichen möglichen Ausführungsbeispielen hervor. In der Zeichnung stellen im einzelnen dar:
- Fig. 1: eine teilweise abgebrochen dargestellte Ansicht von oben auf eine erfindungsgemäße Heuwerbungsmaschine mit in Arbeitsstellung befindlichen Zinkenarmen des Kreiselrechens;
- Fig.2: eine Ansicht ähnlich Fig. 1, bei der sich jedoch drei Zinkenarme des Kreiselrechens in einer Transport- und Parkstellung befinden;
- Fig.3: eine Ausführungsform einer Schwenkverbindung eines Zinkenarmes;
- Fig.4: eine Schnittdarstellung gemäß Schnitt IV- IV in Fig.3;

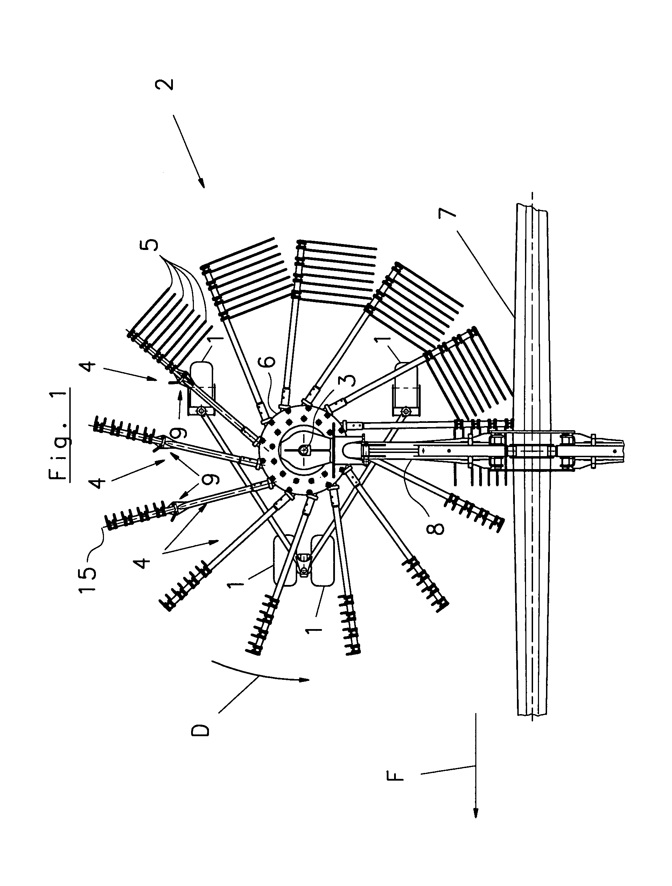

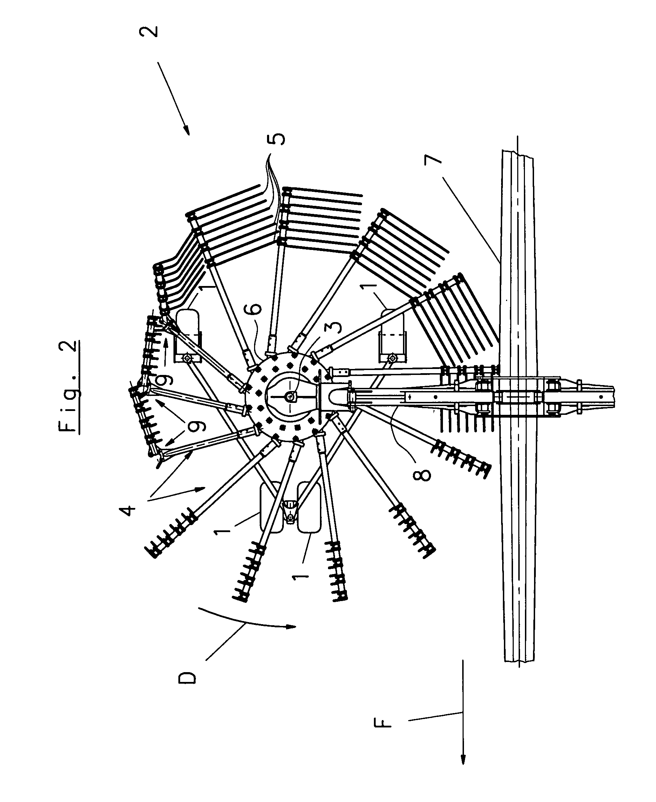

Ein denkbares Ausführungsbeispiel einer nach den Erfindungsmerkmalen gestalteten Heuwerbungsmaschine ist in den Fig. 1 un 2 näher veranschaulicht und umfaßt einen sich über Stützräder 1 gegenüber dem Erdboden abstützenden Kreiselrechen 2, welcher um eine etwa vertikale Achse 3 umlaufende Zinkenarme 4 aufweist. An ihren äußeren Enden sind die Zinkenarme 4 mit Zinken 5 bestückt, während die Zinkenarme 4 an ihren inneren Enden in einem Kreiselgehäuse 6 gelagert sind und mit diesem gemeinsam um die in etwa vertikale Achse 3 in Drehrichtung D rotieren. Aus Gründen einer besseren Übersichtlichkeit ist die Heuwerbungsmaschine in den Fig. 1 und 2 in einer teilweise abgebrochenen Darstellung wiedergegegben. Über einen schwenkbar an einem Tragrahmen 7 angelenkten Tragarm 8 kann der Kreiselrechen 2 aus einer bodenparallelen Arbeits- und Betriebsstellung in eine nahezu vertikale Transportstellung und zurück überführt werden. Derartige Kreiselschwader werden üblicherweise von einer nicht dargestellten landwirtschaftlichen Zug- und Antriebsmaschine in Fahrt- und Arbeitsrichtung F über eine Feld- oder Wiesenfläche bewegt, wobei ihre Kreiselrechen 2 von ebenfalls nicht dargestellten Antriebsgelenkwellen angetrieben werden. Zur Abstützung des Tragrahmens 7 gegenüber dem Erdboden sind Laufräder vorgesehen, welche in den Figuren 1 und 2 jedoch dargestellt sind.

Wie insbesondere aus Fig. 1 und 2 weiterhin zu entnehmen ist, weisen drei der Zinkenarme 4 in ihrem mittleren Bereich eine Schwenkverbindung 9 auf, welche den Zinkenarm 4 in einen inneren Abschnitt 10 und einen äußeren Abschnitt 11 aufteilt. In Fig. 2 ist der äußere Abschnitt 11 der drei Zinkenarme 4 dabei in eine abgeknickte Transport- und Parkstellung verschwenkt, so daß dadurch eine deutliche Reduzierung der Außenabmessung des Kreiselrechen 2 eintritt. Wird dieser Kreiselrechen 2 nun aus der bodenparallelen Arbeits- und Betriebsstellung in eine nahezu vertikale Transportstellung überführt, so ergibt sich daraus eine deutliche Verringerung der Transporthöhe.

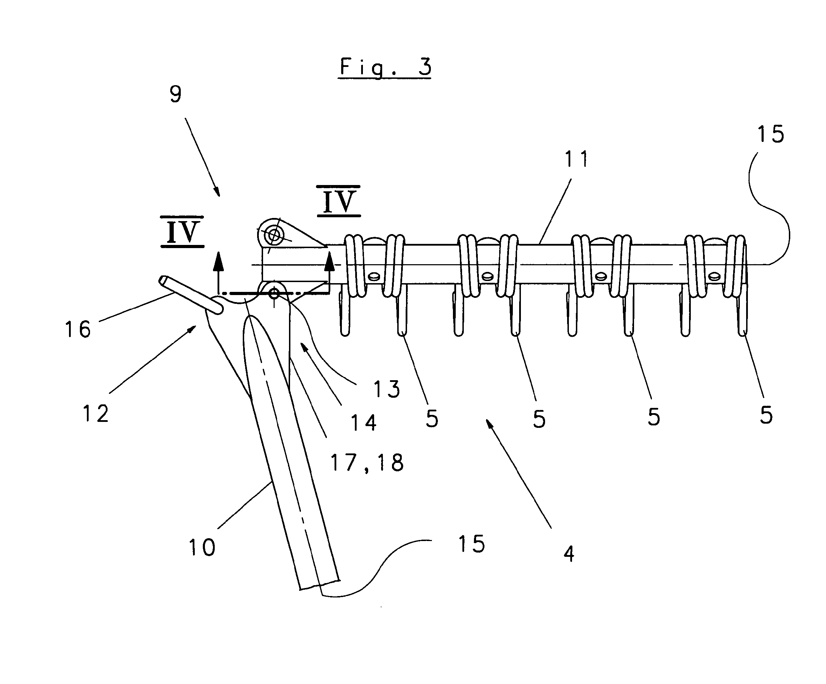

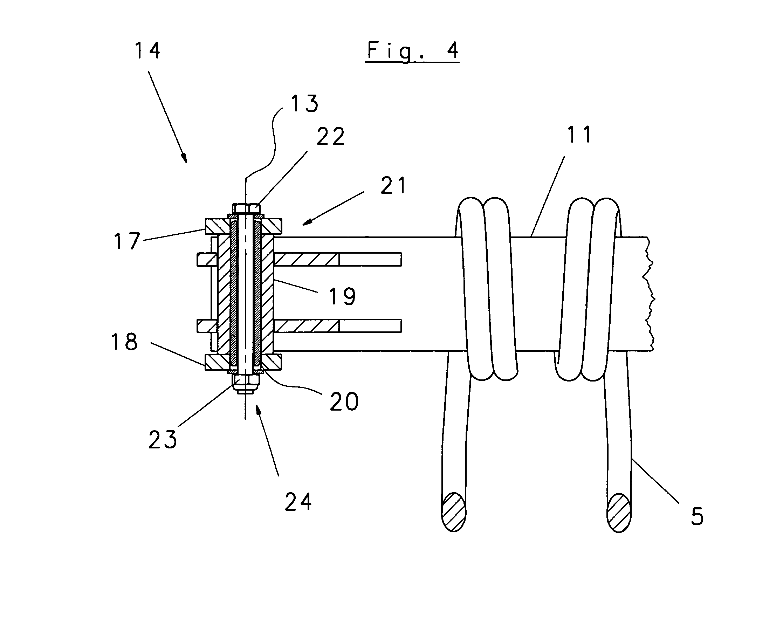

Fig.3 zeigt in einer vergrößerten Darstellung einen mit einer Schwenkverbindung 9 versehenen Zinkenarm 4 in der abgeknickten Transport- und Parkstellung. Wie aus dieser Fig. weiterhin hervorgeht, ist die Schwenkverbindung 9 als ein Gelenk ausgebildet, welches an der in Bezug zur Drehrichtung D des Kreiselrechens 2 (Fig. 1 und 2) vorlaufenden Seite des oder der Zinkenarme 4 eine Steckbolzenverbindung 12 aufweist, während an der in Bezug zur Drehrichtung D des Kreiselrechens 2 (Fig. 1 und 2) nachlaufenden Seite ein um die vertikale Schwenkachse 13 bewegbares Schwenklager 14 angeordnet ist. Dadurch wird eine einfache und mit wenig Kraftaufwand durchzuführende Verschwenkung des äußeren Abschnitts 11 des Zinkenarms 4 aus einer Arbeitsstellung, in der der innere Abschnitt 10 und der äußere Abschnitt 11 entlang einer gemeinsamen Achse 15 (Strecklage) ausgerichtet sind, in eine abgeknickte Transport- und Parkstellung erreicht, in der die Ausrichtung der Achse 15 des inneren Abschnitts 10 von der des äußeren Abschnitts 11 abweicht. Um eine solche Schwenkbewegung einzuleiten, muß lediglich ein Steckbolzen 15 der Steckbolzenverbindung 12 in der Strecklage der Abschnitte 10,11 des oder der Zinkenarme 4 (siehe dazu Fig.1) gelöst werden. Der äußere Abschnitt 11 des oder der Zinkenarme 4 kann dann in die abgeknickte Transportund Parkstellung verbracht werden, ohne daß jedoch die Verbindung zum inneren Abschnitt 10 aufgehoben wird. Auf die Ausbildung des Schwenklagers 14 wird in Fig.4 näher eingegangen.

Eine Schnittdarstellung des Schwenklagers 14 der Schwenkverbindung 9 ist in Fig.4 wiedergegeben. Aus dieser Darstellung wird deutlich, daß das Schwenklager 14 von zwei Laschen 17,18 und einer Lagerbuchse 19 gebildet ist. Als Lagerbolzen dient dabei eine Spannhülse 20. Damit der äußere Abschnitt 11 des oder der Zinkenarme 4 in der Transport- und Parkstellung gehalten wird, ist dem oder den Zinkenarmen 4, hier insbesondere dem Schwenklager 14 eine Vorrichtung 21 zugeordnet, welche das ungewollte Zurückschwenken des äußeren Abschnitts 11 aus der Transport- und Parkstellung unterbindet. Diese Vorrichtung 21 erzeugt im Schwenklager 14 eine Reibkraft, die einer ungewollten Schwenkbewegung des äußeren Abschnitts 11 entgegensteht und durch ein Verspannen der Laschen 17,18 gegenüber der Lagerbuchse 19 erreicht wird. Dazu ist eine aus einer Schraube 22 und einer selbstsichernden Mutter 23 gebildete Schraubverbindung 24 vorgesehen, über dessen Anzugsmoment eine Einstellung der Reibkraft erreicht werden kann.

Weitere denkbare Ausführungsformen können sowohl von einer Anbringung der Steckbolzenverbindung an der in Bezug zur Drehrichtung D des Kreiselrechens 2 nachlaufenden Seite des oder der Zinkenarme 4 (siehe dazu Fig. 1 und 2) oder an deren unterer Seite ausgehen, wobei dann das Schwenklager an der in Bezug zur Drehrichtung D des Kreiselrechens 2 vorlaufenden Seite des oder der Zinkenarme 4 (Fig. 1 und 2) oder an deren oberer Seite angebracht sein müßte. Insbesondere für Heuwerbungsmaschinen mit nur einem Kreiselrechen kann sich eine Anbringung der Steckbolzenverbindung an der unteren Seite des oder der Zinkenarme 4 und eine Anordnung des Schwenklagers an der oberen Seite des oder der Zinkarme 4 als vorteilhaft erweisen, da bei einer großen Anzahl von Zinkenarmen an einem Kreiselrechen durch die oberhalb von den inneren Abschnitten 10 des oder der Zinkenarme 4 abgelegten äußeren Abschnitte 11 des oder der Zinkenarme 4 eine größere Reduzierung der Außenabmessungen des Kreiselrechens ermöglicht wird.

Obwohl in der Beschreibung und in den dazugehörigen Zeichnungen bereits vorteilhafte Ausführungen beschrieben wurden, so sind im Rahmen der Erfindung durchaus weitere Modifikationen vorstellbar. Als Beispiel sei eine Ausführungsform erwähnt, bei der dem oder den Zinkenarmen 4 zur Halterung des äußeren Abschnittes 11 in der abgeknickten Transportund Parkstellung eine weitere Steckbolzenverbindung zugeordnet ist.

## Patentansprüche

1. Kreiselrechen für eine Heuwerbungsmaschine, insbesondere für einen Kreiselschwader, mit um eine etwa vertikal ausgerichtete Achse (3) umlaufenden, an ihren äußeren Enden mit Zinken (5) bestückten Zinkenarmen (4), welche drehbar oder starr an einem Kreiselgehäuse (6) gehaltert sind und wobei zumindest einer der Zinkenarme (4) durch eine Schwenkverbindung (9) in einen inneren Abschnitt (10) und einen äußeren Abschnitt (11) aufteilt ist und wobei der äußere Abschnitt (11) gegenüber dem inneren Abschnitt (10) aus einer Arbeitsstellung (Strecklage) in eine von einer gemeinsamen Achse (15) abweichenden, abgeknickten Transport- und Parkstellung überführbar ist und in dieser abgeknickten Transport- und Parkstellung gehalten wird.

2. Kreiselrechen für eine Heuwerbungsmaschine nach Anspruch 1, **dadurch gekennzeichnet, daß** die Schwenkverbindung (9) eine Schwenkachse (13) aufweist, welche in der Arbeits- und Betriebsstellung des Kreiselrechens in etwa vertikal ausgerichtet ist.

3. Kreiselrechen für eine Heuwerbungsmaschine nach Anspruch 1, **dadurch gekennzeichnet, daß** die Schwenkverbindung (9) eine Schwenkachse aufweist, welche in der Arbeits- und Betriebsstellung des Kreiselrechens in etwa horizontal ausgerichtet ist.

4. Kreiselrechen für eine Heuwerbungsmaschine nach Anspruch 1 und 2, **dadurch gekennzeichnet, daß** die Schwenkverbindung (9) als Gelenk ausgebildet ist, welches an der in Bezug zur Drehrichtung (D) des Kreiselrechens (2) vorlaufenden Seite des oder der Zinkenarme (4) eine Steckbolzenverbindung (12) aufweist, während an der in Bezug zur Drehrichtung (D) nachlaufenden Seite ein um die etwa vertikale Schwenkachse (13) bewegbares Schwenklager (14) angeordnet ist.

5. Kreiselrechen für eine Heuwerbungsmaschine nach Anspruch 1 und 3, **dadurch gekennzeichnet, daß** die Schwenkverbindung (9) als Gelenk ausgebildet ist, welches an der unteren Seite des oder der Zinkenarme (4) eine Steckbolzenverbindung aufweist, während an der oberen Seite ein um die etwa horizontale Schwenkachse bewegbares Schwenklager angeordnet ist.

6. Kreiselrechen für eine Heuwerbungsmaschine nach einem der Ansprüche 1 bis 5, **dadurch gekennzeichnet, daß** dem oder den Zinkenarmen (4) eine Vorrichtung (21) zugeordnet ist, welche dazu geeignet ist, daß der äußere Abschnitt (11) der Zinkenarme (4) nach dem Lösen der Steckbolzenverbindung (12) in der von der gemeinsamen Achse (15) abweichenden, abgeknickten Transport- und Parkstellung gehalten wird/werden.

7. Kreiselrechen für eine Heuwerbungsmaschine nach Anspruch 6, **dadurch gekennzeichnet, daß** das Schwenklager (14) der Schwenkverbindung (9) zwei Laschen (17,18) des inneren Abschnittes (10) des oder der Zinkenarme (4) umfaßt, welche mit einer Lagerbuchse (19) des äußeren Abschnittes (11) derart zusammenwirkt, daß der äußere Abschnitt (11) des oder der Zinkenarme (4) nach Überwindung einer Reibkraft um die Schwenkachse (13) verschwenkbar ist/sind.

8. Kreiselrechen für eine Heuwerbungsmaschine nach Anspruch 7, **dadurch gekennzeichnet, daß** die Größe der Reibkraft zwischen den Laschen (17,18) und der Lagerbuchse (19) durch eine Schraubverbindung (24) einstellbar ausgebildet ist.

9. Kreiselrechen für eine Heuwerbungsmaschine nach Anspruch 6, **dadurch gekennzeichnet, daß** dem oder den Zinkenarmen (4) zur Halterung des äußeren Abschnittes (11) in der abgeknickten Transport- und Parkstellung eine weitere Steckbolzenverbindung zugeordnet ist.
